**Europäisches Patentamt**

**European Patent Office**

**Office européen des brevets**

(11) Veröffentlichungsnummer: **0 210 354**
**A1**

(19)

(12) **EUROPÄISCHE PATENTANMELDUNG**

(21) Anmeldenummer: 86106449.1

(22) Anmeldetag: 13.05.86

(51) Int. Cl.⁴: **F 16 M 5/00**

(30) Priorität: 04.07.85 DE 3523868

(43) Veröffentlichungstag der Anmeldung:
04.02.87 Patentblatt 87/6

(84) Benannte Vertragsstaaten:
BE DE FR GB IT NL

(71) Anmelder: **MAN GUTEHOFFNUNGSHÜTTE GMBH**
**Bahnhofstrasse, 66**
**D-4200 Oberhausen 11(DE)**

(72) Erfinder: **Böhm, Herbert**
**Daimlerstrasse 30**
**D-4250 Bottrop(DE)**

(72) Erfinder: **Neumann, Manfred**
**Waterkampstrasse 10**
**D-4100 Duisburg 11(DE)**

(54) **Vorrichtung zum Ausrichten und Auflagern von umlaufenden Kraft- und Arbeitsmaschinen.**

(57) Bei einer Vorrichtung zum Auflagern von umlaufenden Kraft- und Arbeitsmaschinen sind an der Unterseite der Pratzenbeilage (4) Ausrichtschrauben (5) zum Justieren des Maschine auf dem Maschinenuntergestell angeordnet. Die Maschine wird mit den Ausrichtschrauben (5) auf den Pratzenauflagen (3) der Aufbauten (2) des Grundrahmens (1) aufgesetzt. Durch tragende Flachstähle (6) sind die Pratzenauflagen (3) mit den Pratzenbeilagen (4) verschweißt.

Fig. 3

EP 0 210 354 A1

Die Erfindung betrifft eine Vorrichtung zum Ausrichten und Auflagern von umlaufenden Kraft- und Arbeitsmaschinen auf einem Maschinenuntergestell, bestehend aus einem geschweißten Grundrahmen mit Aufbauten, Auflagepratzen und Pratzenbeilagen.

Bei der Aufstellung von umlaufenden Kraft- und Arbeitsmaschinen wie Axial-, Radialverdichtern, Getrieben, Motoren, Turbinen usw. werden die Pratzen der Maschinengehäuse auf Pratzenauflagen der Aufbauten des Grundrahmens gelagert. An die Unterseite der Maschinengehäusepratzen werden Pratzenbeilagen mit Edelstahlbeilagen geschraubt. Die Auflageflächen der Maschinengehäusepratzen der Pratzenbeilagen und der Pratzenauflagen der Aufbauten müssen zuvor mechanisch bearbeitet werden, d.h. geschlichtet, z. T. auch geschliffen werden. Das Ausrichten der Maschine geschieht durch Zwischenlegen von Blechen.

Der Aufwand für die Bearbeitung der Auflageflächen ist bei großen Maschinen oder Maschinengruppen erheblich.

Aufgabe der Erfindung ist es, die Grundrahmenbearbeitung im Bereich der Maschinenauflageflächen zu vereinfachen, um damit die Durchlaufzeiten in der Werkstatt zu verkürzen und die Bearbeitungskosten zu senken.

Nach der Erfindung wird diese Aufgabe in der Weise gelöst, wie es im Patentanspruch angegeben ist.

Gegenüber dem Stand der Technik bleiben bei der erfindungsgemäßen Ausführung die Pratzenauflagen der Aufbauten unbearbeitet und ebenso die Unterseite der von unten an die Maschinengehäusepratzen angeschraubten Beilage bedarf keiner Bearbeitung.

0210354

Mit Hilfe von Ausrichtschrauben wird die auf den Grundrahmen aufgesetzte Maschine justiert. Anschließend werden senkrecht stehende Flachstähle an mindestens drei Seiten, einerseits an die Pratzenauflage der Aufbauten, andererseits an die Beilage an der Unterseite der Maschinengehäusepratze angeschweißt. Diese Flachstähle sind so ausgelegt, daß sie in der Lage sind, die Lasten der aufliegenden Maschine aufzunehmen.

Die erfindungsgemäße Auflagekonstruktion für umlaufende Kraft- und Arbeitsmaschinen macht das Bearbeiten des Grundrahmens auf einem Portalfräswerk entbehrlich, ein erheblicher Aufwand insbesondere, wenn es sich um Konstruktionen großer Abmessungen wie Grundrahmen für Maschinengruppen handelt.

Ein Ausführungsbeispiel der Erfindung wird nachstehend anhand der schematischen Zeichnung näher erläutert. Es zeigen

Figur 1    den Schnitt eines Maschinengrundrahmens
           mit Aufbauten und Pratzenauflagen,

Figur 2    den Schnitt einer erfindungsgemäßen
           Pratzenauflage und

Figur 3    eine perspektivische Ansicht der Pratzenauflage.

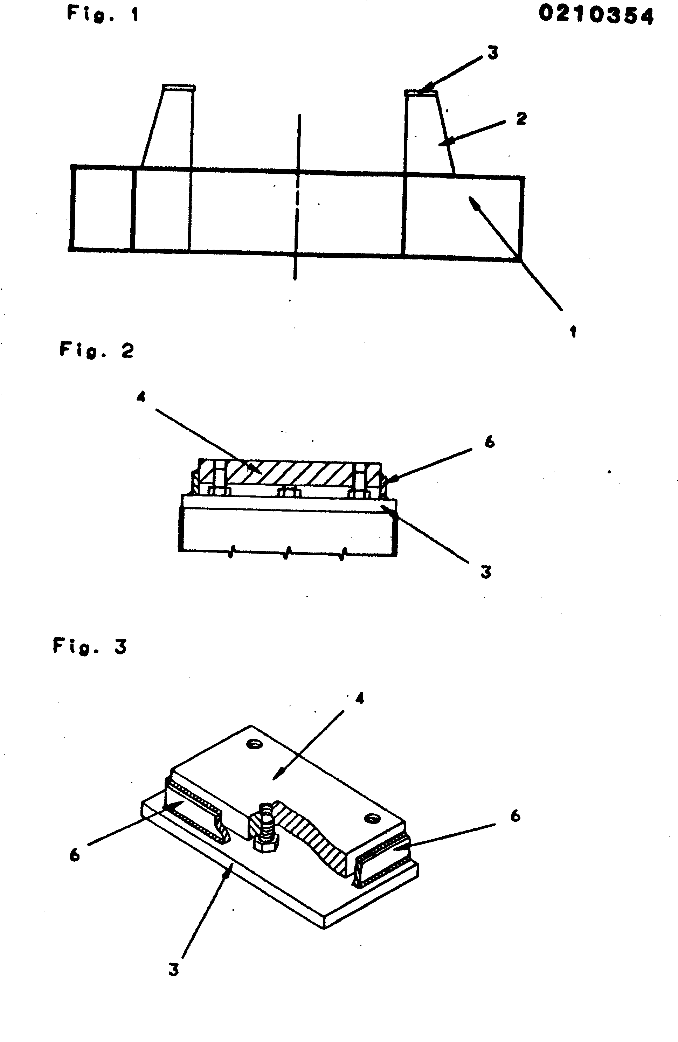

In Figur 1 ist ein Grundrahmen 1 in üblicher Schweißkonstruktion gezeigt. Auf diesem aufgeschweißt sind die Aufbauten 2 mit den Pratzenauflagen 3.

Die Figuren 2 und 3 zeigen die erfindungsgemäße Pratzenauflage 3 mit der Pratzenbeilage 4 im einzelnen.

Die Pratzenbeilage 4 ist nur oberseitig bearbeitet und wird von unten an die (nicht dargestellte) Pratze des aufzulagernden Maschinengehäuses geschraubt. Die Unterseite der Pratzenbeilage 4 ist unbearbeitet. Zwischen Maschinengehäusepratze und Pratzenbeilage 4 wird in vielen Fällen noch eine Edelstahlbeilage (nicht dargestellt) angeordnet, die eine Gleitlagerfunktion erfüllt.

Die Pratzenauflage 3 ist oberseitig unbearbeitet. Zwischen Pratzenauflage 3 und Pratzenbeilage 4 sind Ausrichtschrauben 5 erkennbar, mit deren Hilfe das Justieren der aufgelagerten Kraft- oder Arbeitsmaschine stattfindet. Gegebenenfalls kann beim Ausrichten zwischen Pratzenbeilage 4 und Pratzenauflage 3 eine Vergußmasse (z.B. Kunstharz) eingebracht werden.

Nach dem Ausrichten werden, wie aus den Figuren 2 und 3 ersichtlich, an mindestens drei Seiten der Pratzenbeilage 4 senkrechtstehende Flachstähle 6 an Pratzenauflage 3 und Pratzenbeilage 4 angeschweißt.

Anstatt der beschriebenen Anbringung von Flachstählen 6 kann alternativ anstelle der oberen Schweißnaht zur Verbindung der Flachstähle 6 mit der Pratzenauflage 4 selbstverständlich auch eine Verstiftung oder Verschrau- bung vorgenommen werden.

Patentanspruch:

Vorrichtung zum Ausrichten und Auflagern von umlaufenden Kraft- und Arbeitsmaschinen auf einem Maschinenuntergestell, bestehend aus geschweißtem Grundrahmen mit Aufbauten, Auflagepratzen und Pratzenbeilagen, dadurch gekennzeichnet, daß die Oberseite der Pratzenauflage (3) und die Unterseite der Pratzenbeilage (4) unbearbeitet sind, daß an der Unterseite der Pratzenbeilage (4) mindestens drei Ausrichtschrauben (5) angeordnet sind und daß an mindestens drei Seiten der Pratzenbeilage (4) senkrechtstehende Flachstähle (6) angeordnet sind, die mit der Pratzenauflage (3) und der Pratzenbeilage (4) verschweißt sind.

Fig. 1

1/1

0210354

Fig. 2

Fig. 3

### Europäisches Patentamt

## EUROPÄISCHER RECHERCHENBERICHT

| | EINSCHLÄGIGE DOKUMENTE | | EP 86106449.1 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE - A1 - 3 307 923 (KLEIN, SCHANZLIN & BECKER AG) <br><br> * Gesamt * <br><br> -- | | F 16 M 5/00 |
| A | US - A - 4 100 714 (STITH, JR.) <br><br> * Zusammenfassung; Fig. 2 * <br><br> -- | | |
| A | DD - A - 211 616 (VEB BERGMANN-BORSIG/GOERLITZER MASCHINENBAU) <br><br> * Gesamt * <br><br> ---- | | |

**RECHERCHIERTE SACHGEBIETE (Int. Cl 4)**

F 16 M 1/00
F 16 M 3/00
F 16 M 5/00
F 16 M 7/00

Der vorliegende Recherchenbericht wurde für alle Patentansprüche erstellt.

| Recherchenort | Abschlußdatum der Recherche | Prüfer |
|---|---|---|
| WIEN | 16-10-1986 | PIRKER |